# EUROPEAN PATENT APPLICATION

(11) **EP 4 769 693 A1**
(43) Date of publication of application: **01.07.2026**
(21) Application number: 25830977.2
(22) Date of filing: 25.03.2025
(51) Int. Cl.: H01M 50/143, H01M 50/533, H01M 50/183, H01M 50/105

(54) **BATTERY CELL FOR RETARDING THERMAL PROPAGATION**

(30) Priority: 18.06.2024 KR 20240079041
(71) Applicant: LG Energy Solution, Ltd., Seoul 07335 (KR)
(72) Inventor: UHM, Jae Yong, Daejeon 34122 (KR)
(74) Representative: BCKIP Part mbB
(86) International application number: PCT/KR2025/003810
(87) International publication number: WO 2025/263752

(57) **Abstract**

A battery cell according to an embodiment of the present disclosure includes an electrode assembly including electrode leads, a cell case having a cell terrace on one side where the electrode leads are disposed and accommodating the electrode assembly, and a heat transfer prevention pad disposed on the cell terrace of the cell case. The battery cell according to an embodiment of the present disclosure has the effect of delaying thermal propagation to adjacent cells through a heat transfer prevention pad in the event of thermal runaway.

## Description

### [TECHNICAL FIELD]

The present disclosure relates to a battery cell in which thermal propagation is delayed, and more specifically, to a battery cell in which thermal propagation to an adjacent cell is delayed when a battery module experiences thermal runaway.

### [BACKGROUND ART]

Unlike a primary battery that cannot be recharged, a secondary battery can be charged and discharged and is applied not only to portable devices but also to electric vehicles (EVs) and hybrid electric vehicles (HEVs) driven by an electric drive source.

The types of secondary batteries that are currently widely used include lithium ion batteries, lithium polymer batteries, nickel cadmium batteries, nickel hydrogen batteries, nickel zinc batteries, etc. The operating voltage of a unit secondary battery cell, i.e., a unit battery cell, is approximately 2.5 V to 4.6 V. Therefore, when an output voltage higher than the operating voltage is required, a battery pack is configured by connecting a plurality of battery cells in series. In addition, a battery pack may be configured by connecting a plurality of battery cells in parallel depending on the charge/discharge capacity required for the battery pack. Accordingly, the number of battery cells included in the battery pack can be set variously depending on the required output voltage or charge/discharge capacity.

In a case where a battery pack is configured by connecting a plurality of battery cells in series/in parallel, a battery module composed of at least one battery cell, preferably, a plurality of battery cells, is configured first, and then a battery pack is configured using at least one such battery module and adding other components, in general. Here, a battery module means a component in which a plurality of battery cells is connected in series or in parallel, and a battery pack means a component in which a plurality of battery modules is connected in series or in parallel to increase capacity and output.

The battery module generates heat depending on charging or discharging, and if overcharging occurs, an explosion or fire may occur due to swelling of a battery cell, and such an explosion or fire may cause a greater risk of causing casualties.

### [DETAILED DESCRIPTION OF INVENTION]

### [TECHNICAL PROBLEMS]

An object of the present disclosure is to provide a battery cell and a battery module capable of delaying thermal propagation to adjacent cells when a battery cell experiences thermal runaway.

### [TECHNICAL SOLUTION]

A battery cell according to an embodiment of the present disclosure includes an electrode assembly including electrode leads, a cell case having a cell terrace on one side where the electrode leads are disposed and accommodating the electrode assembly, and a heat transfer prevention pad disposed on the cell terrace of the cell case.

In addition, the cell terrace may be disposed on both sides of the cell case, and the heat transfer prevention pad may be disposed on each of the cell terraces on both sides of the cell case.

In addition, the heat transfer prevention pad may include a first pad part disposed on one side of the cell terrace, and a second pad part disposed on the other side of the cell terrace.

In addition, the first pad part and the second pad part may include adhesive tapes and may be attached to the cell terrace by the adhesive tapes.

In addition, the heat transfer prevention pad may further include a connection part for connecting the first pad part and the second pad part.

In addition, the first pad part, the second pad part, and the connection part in the heat transfer prevention pad may be formed integrally.

In addition, the connection part may include a slot.

In addition, the cell terrace may include an insertion tab inserted into the slot.

In addition, the insertion tab inserted into the slot may have a bent portion bent toward the heat transfer prevention pad.

In addition, the bent portion may be a U-shaped bent portion.

In addition, an end of the bent portion may be disposed to be in contact with the heat transfer prevention pad.

In addition, the heat transfer prevention pad may include silicon.

In addition, the electrode assembly may include a lead film disposed on the electrode leads.

In addition, the heat transfer prevention pad may cover the lead film.

In addition, the battery cell may be a pouch-type battery cell.

### [EFFECT OF INVENTION]

A battery cell and a battery module according to an embodiment of the present disclosure can delay thermal propagation to adjacent cells in the event of thermal runaway.

### [BRIEF DESCRIPTION OF THE DRAWING]

FIG. 1 is a perspective view of a battery module according to an embodiment of the present disclosure.
FIG. 2 is an exploded perspective view of the battery module according to an embodiment of the present disclosure.
FIG. 3 is a perspective view of a terminal busbar in an embodiment of the present disclosure.
FIG. 4 is a perspective view of an insulating cover and an end plate in an embodiment of the present disclosure.
FIG. 5 is a plan view of a battery cell in an embodiment of the present disclosure.
FIG. 6 is a diagram showing the inside of a pouch-type battery cell in an embodiment of the present disclosure.
FIG. 7 is a diagram showing an electrode assembly in an embodiment of the present disclosure.
FIG. 8 is a partial detailed view of the pouch-type battery cell in an embodiment of the present disclosure.
FIG. 9 is a perspective view of a heat transfer prevention pad according to an embodiment of the present disclosure.
FIG. 10 is a partial detailed view of the pouch-type battery cell in FIG. 8.
FIG. 11 is a diagram showing a cell terrace of the pouch-type battery cell before attachment of the heat transfer prevention pad in an embodiment of the present disclosure.
FIG. 12 is a diagram showing a battery pack according to an embodiment of the present disclosure.
FIG. 13 is a perspective view of a vehicle equipped with the battery pack according to an embodiment of the present disclosure.

### [BEST MODE FOR CARRYING OUT THE INVENTION]

The advantages and features of the present disclosure, and the methods for achieving the same will become clear with reference to the embodiments described below in conjunction with the accompanying drawings. However, the present disclosure is not limited to the embodiments disclosed below, but may rather be implemented in various different forms, these embodiments are provided only to make the present disclosure complete and to fully inform those skilled in the art of the scope of the disclosure, and the present disclosure is defined only by the scope of the claims. Accordingly, in some embodiments, well-known process steps, well-known device structures, and well-known techniques are not specifically described in order to avoid ambiguity in the interpretation of the present disclosure. Like reference numerals refer to like elements throughout the specification.

In the drawings, the thickness may be enlarged to clearly express various layers and regions. Like reference numerals are used for similar parts throughout the specification. When a part, such as a layer, a film, a region, or a plate, is said to be "on" another part, this includes not only cases where it is "directly on" the other part, but also cases where there is another part in between. Conversely, when a part is said to be "directly on" another part, it means that there is no other part in between. Further, when a part, such as a layer, a film, a region, or a plate, is said to be "beneath" another part, this includes not only cases where it is "directly beneath" the other part, but also cases where there are other parts in between. Conversely, when a part is said to be "directly beneath" another part, it means that there are no other parts in between.

A battery cell 110 and a battery module 1000 for delaying thermal propagation according to a preferred embodiment of the present disclosure will be described in detail with reference to the drawings.

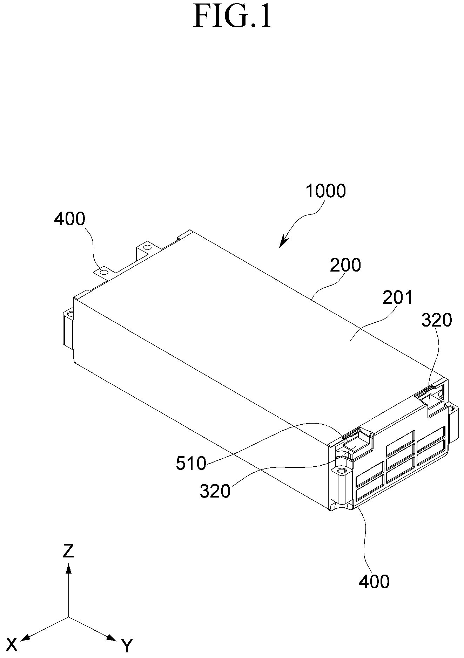

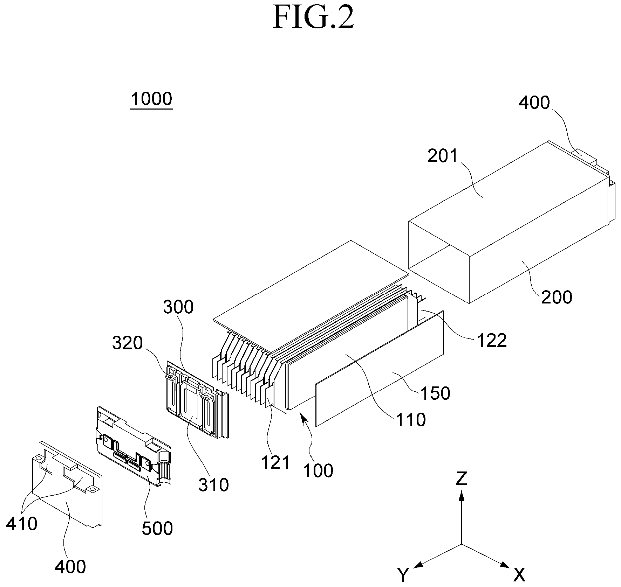

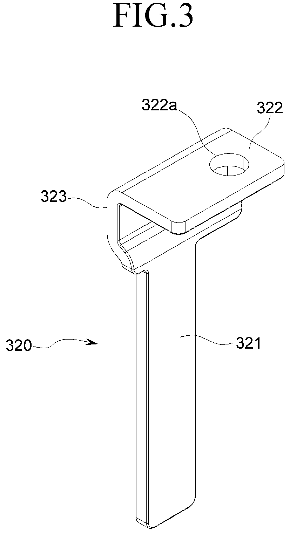

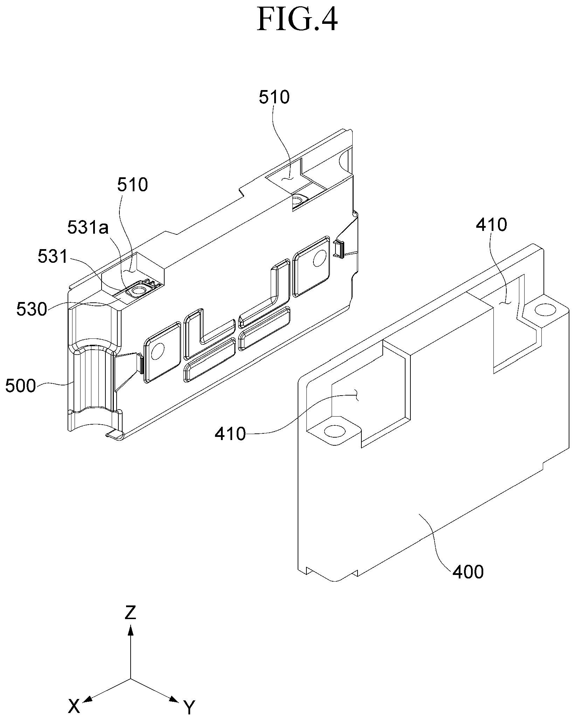

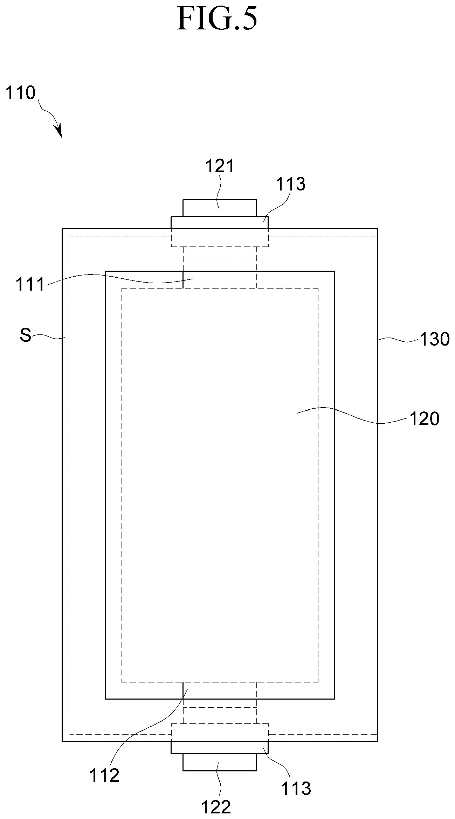

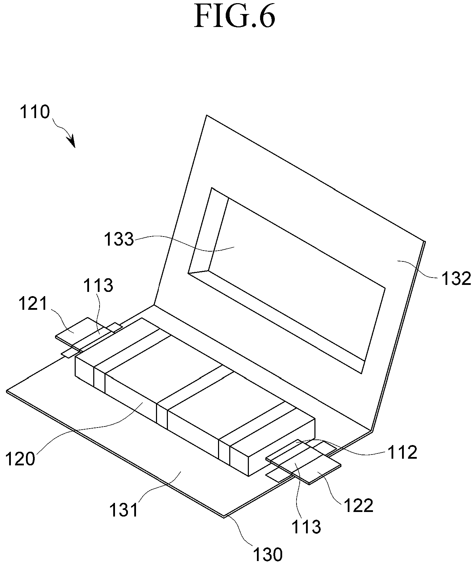

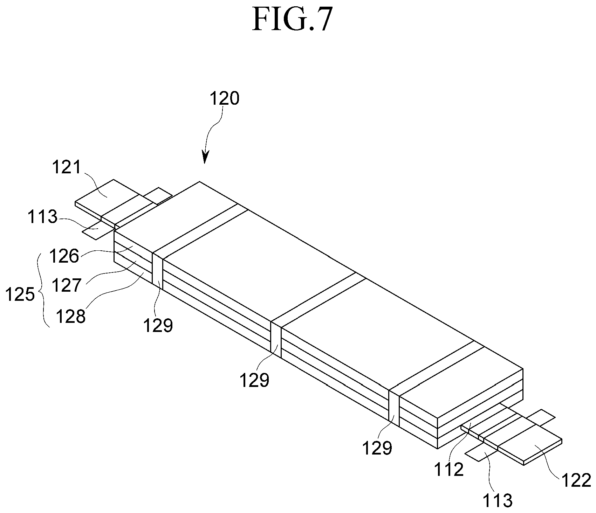

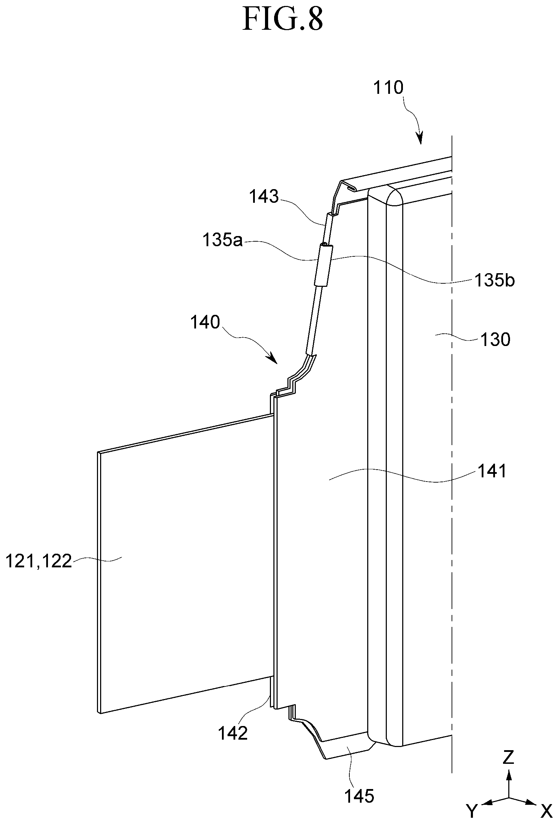

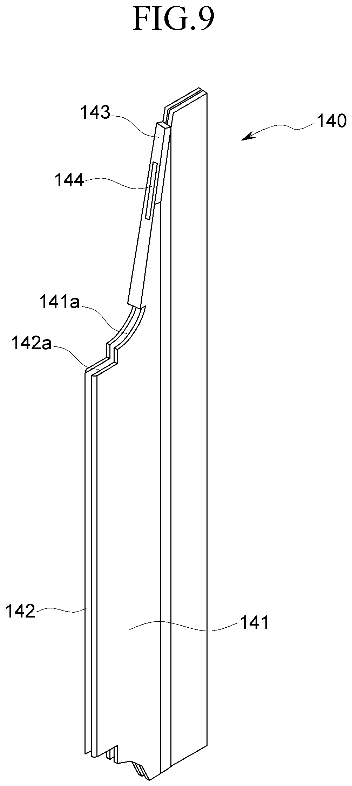

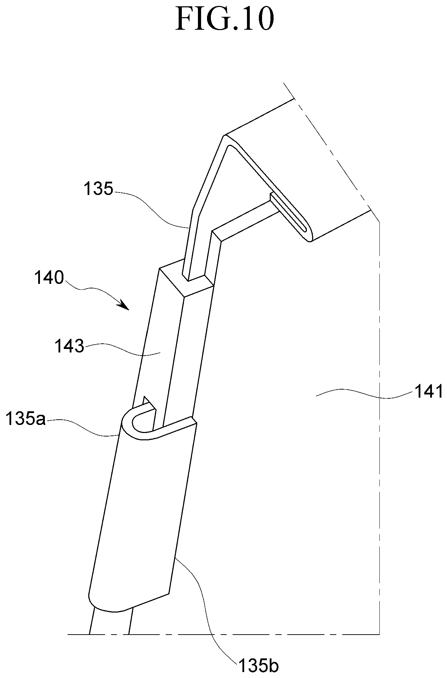

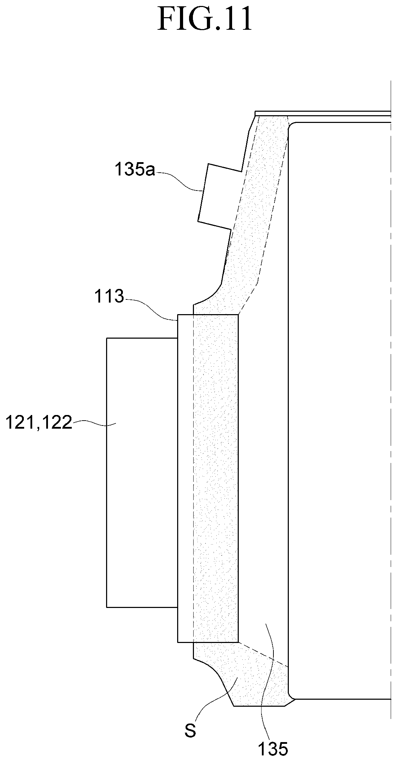

FIG. 1 is a perspective view of a battery module according to an embodiment of the present disclosure, FIG. 2 is an exploded perspective view of the battery module according to an embodiment of the present disclosure, FIG. 3 is a perspective view of a terminal busbar in an embodiment of the present disclosure, FIG. 4 is a perspective view of an insulating cover and an end plate in an embodiment of the present disclosure, FIG. 5 is a plan view of a battery cell in an embodiment of the present disclosure, FIG. 6 is a diagram showing the inside of a pouch-type battery cell in an embodiment of the present disclosure, FIG. 7 is a diagram showing an electrode assembly in an embodiment of the present disclosure, FIG. 8 is a partial detailed view of the pouch-type battery cell in an embodiment of the present disclosure, FIG. 9 is a perspective view of a heat transfer prevention pad in an embodiment of the present disclosure, FIG. 10 is a partial detailed view of the pouch-type battery cell in FIG. 8, and FIG. 11 is a diagram showing a cell terrace of the pouch-type battery cell before attachment of the heat transfer prevention pad in an embodiment of the present disclosure.

The battery module 1000 according to an embodiment of the present disclosure may include a battery cell stack 100 in which a plurality of battery cells 110 is stacked, a module case 200 that accommodates the battery cell stack 100, a busbar frame 300 positioned on one side and/or the other side of the battery cell stack 100, an insulating cover 500 positioned on the outside of the busbar frame 300, and an end plate 400 positioned on the outside of the insulating cover 500.

The battery cell stack 100 may be formed by stacking a plurality of battery cells 110 in one direction, and the plurality of battery cells 110 may be electrically connected. The direction in which the plurality of battery cells 110 is stacked may be the X-axis direction (or -X-axis direction) in FIG. 2.

The direction from the front to the rear of the battery cell stack 100 or the opposite direction may be defined as a longitudinal direction of the battery cell stack 100, and may be the Y-axis direction in the drawing. In addition, the direction from the top surface to the bottom surface of the battery cell stack 100 or the opposite direction may be defined as a width direction of the battery cell stack 100, and may be the Z-axis direction in the drawing.

The longitudinal direction of the battery cell stack 100 may be substantially the same as the longitudinal direction of the battery cells 110. Electrode leads 121 and 122 of the battery cells 110 may be positioned on the front and rear sides of the battery cell stack 100, and busbars 310 and 320 of the battery module 1000 may be disposed close to the front and rear sides of the battery cell stack 100 to be easily electrically connected with the electrode leads 121 and 122. The battery cells 110 will be described later.

The module case 200 may be for protecting the battery cell stack 100 and electrical components connected thereto from external physical impact, and the module case 200 may accommodate the battery cell stack 100 and the electrical components connected thereto in the internal space of the module case 200.

The module case 200 may have various structures, and for example, the module case 200 may have a mono-frame structure. Here, the mono-frame may take the form of a metal plate in which the upper surface, lower surface, and both side surfaces are integrated. The mono-frame may be manufactured by extrusion molding. As another example, the module case 200 may have a structure in which a U-shaped frame and a top plate 201 are combined. In the case of a structure in which a U-shaped frame and a top plate 201 are combined, the structure of the module case 200 may be formed by combining the top plate 201 with the upper side of the U-shaped frame, which is a metal plate in which a lower plate and both side surfaces are combined or integrated, and each frame or plate may be manufactured by press molding. In addition, the structure of the module case 200 may be an L-shaped frame structure in addition to a mono-frame or a U-shaped frame 210, and various structures not described in the above-described examples may be provided as the structure of the module case 200.

The structure of the module case 200 may be provided in an open form in the longitudinal direction of the battery cell stack 100. The front and rear of the battery cell stack 100 may not be covered by the module case 200. The electrode leads 111 and 112 of the battery cell 110 may not be covered by the module case 200. The front and rear of the battery cell stack 100 may be covered by the busbar frame 300, the end plate 400, or the busbars 310 and 320 which will be described later, and accordingly, the front and rear of the battery cell stack 100 may be protected from external physical impact, etc.

A compression pad 150 may be located between the battery cell stack 100 and one side of the inner surface of the module case 200.

The compression pad 150 may be disposed to face the battery cell 110 positioned at the outermost side of the battery cell stack 100 in the X-axis direction in the drawing in the battery cell stack 100.

In addition, a thermally conductive resin may be injected between the battery cell stack 100 and the inner surface of the module case 200, and a thermally conductive resin layer 610 may be formed between the battery cell stack 100 and one of the inner surfaces of the module case 200 by the injected thermally conductive resin. Here, the thermally conductive resin layer 610 may be positioned on the Z-axis of the battery cell stack 100, and may be formed between the battery cell stack 100 and a lower plate of the module case 200 positioned on the -Z-axis.

The busbar frame 300 is positioned on one side of the battery cell stack 100, and may cover one side of the battery cell stack 100 and guide connection between the battery cell stack 100 and an external device. Specifically, the busbar frame 300 may be positioned on the front or rear side of the battery cell stack 100 as illustrated, or may also be positioned on the upper side, lower side, or side. At least one of the busbars 310 and 320 and a module connector may be mounted on the busbar frame 300. As illustrated in FIG. 2, one side of the busbar frame 300 may be connected to one side or the other side of the battery cell stack 100, and the other side of the busbar frame 300 may be connected to the busbars 310 and 320.

The busbar frame 300 may include an electrically insulating material. The busbar frame 300 can limit the busbars 310 and 320 from contacting other parts of the battery cells 110 other than parts where the busbars are connected to the electrode leads 111 and 112, and can prevent electrical short circuits from occurring.

The busbar frame 300 may be positioned on one side and the other side of the battery cell stack 100.

The busbars 310 and 320 may be mounted on one side of the busbar frame 300 and can be used to electrically connect the battery cell stack 100 or the battery cells 110 to an external device circuit. A plurality of busbars 310 and 320 may be provided, and may be positioned between the battery cell stack 100 or the busbar frame 300 and the end plate 400, thereby being protected from external impacts, and minimizing deterioration of durability due to external moisture, etc.

The busbars 310 and 320 may be electrically connected to the battery cell stack 100 through the electrode leads 121 and 122 of the battery cells 110.

Specifically, the electrode leads 121 and 122 of the battery cells 110 may be bent after passing through lead slits formed in the busbar frame 300 and connected to the busbars 310 and 320. The battery cells 110 constituting the battery cell stack 100 can be connected in series or in parallel by the busbars 310 and 320.

The busbars 310 and 320 may include a terminal busbar 320 for electrically connecting one battery module 100 to another battery module 100. At least a portion of the terminal busbar 320 may be exposed to the outside of the end plate 400 to be connected to another battery module 100, and the end plate 400 may have a terminal opening 410 for this purpose.

One end (second portion 322) of the terminal busbar 320 may be exposed through an opening 510 of the insulating cover 500 and the terminal opening 410 of the end plate 400.

As illustrated in FIG. 3, the terminal busbar 320 may include a first portion 321 connected to the electrode leads 111 and 112 of the battery cell 110 and the second portion 322 exposed to the outside through the terminal opening 410. In addition, the terminal busbar 320 may further include a bent portion 323 formed between the first portion 321 and the second portion 322.

In the terminal busbar 320, the first portion 321 may be connected to the second portion 322 through the bent portion 323, and one side of the first portion 321 and one side of the second portion 322 may be perpendicular to each other. That is, by forming the bent portion 323 in the terminal busbar 320, the second portion 322 protrudes and is mounted on a mounting portion 530 of the insulating cover 500, and the second portion 322 can be electrically connected to an inter-busbar (not shown). A joining hole 322a is formed in the second portion 322 forming one end of the terminal busbar 320, and the second portion 322 of the terminal busbar 320 is fixed by a fixing pin (not shown) inserted into the joining hole 322a.

The end plate 400 may serve to protect the battery cell stack 100 and the electrical components connected thereto from external physical impact by covering an open surface of the module case 200. For this purpose, the end plate 400 may be manufactured using a material having a predetermined strength, and for example, the end plate 400 may be formed of a metal such as aluminum or a plastic material.

The terminal opening 410 may be formed in the end plate 400. The terminal opening 410 may be positioned on each side of the end plate 400, and a portion of the insulation cover 500 and one end (second portion 322) of the terminal busbar 320 may be exposed through the terminal opening 410.

In addition, a connector opening may be positioned between the terminal openings 410 located on both sides of the end plate 400, and a module connector may be exposed to the outside through the connector opening.

The end plate 400 may be combined with the module case 200 while covering the busbar frame 300 or the busbars 310 and 320 located on one side of the battery cell stack 100. Each corner of the end plate 400 may be joined to the corresponding corner of the module case 200 by welding, bolting, hooking, or the like.

The end plate 400 may be positioned on one side and the other side of the module case 200 to cover both sides of the battery cell stack 100. In the present embodiment, an example in which the end plate 400 is positioned on the front and rear sides of the module case 200 is illustrated.

In addition, the insulating cover 500 for electrical insulation may be positioned between the end plate 400 and the busbar frame 300. That is, the busbar frame 300, the insulating cover 500, and the end plate 400 may be sequentially positioned from the battery cell stack 100 to the outside. Like the end plate 400, a plurality of busbar frames 300 and a plurality of insulating covers 500 may be provided.

The insulating cover 500 may include an electrical insulating material and may block the busbars 310 and 320 from contacting the end plate 400.

The insulating cover 500 may include the opening 510 and the mounting portion 530. The opening 510 may be positioned on both sides of the upper part of the insulating cover 500, and one end (the second portion 322) of the terminal busbar 320 may be exposed through the opening 510.

In addition, a connector opening may be positioned between the openings 510 located on both sides of the insulating cover 500, and the module connector may be exposed to the outside through the connector opening.

The insulating cover 500 may be positioned on the inner surface of the end plate 400, and may be in close contact with the inner surface of the end plate 400, but the present disclosure is not limited thereto.

As described above, one end (the second portion 322) of the terminal busbar 320 may be exposed through the opening 510, and the exposed one end (second portion 322) of the terminal busbar 320 may be mounted on the mounting portion 530. Accordingly, the mounting portion 530 may be positioned adjacent to the opening 510 and may be positioned on the upper outer surface.

The second portion 322 of the terminal busbar 320 may be mounted on the upper surface of the mounting portion 530, and thus the upper surface of the mounting portion 530 may form a mounting surface. In addition, as illustrated in FIG. 4, the mounting portion 530 may include a fixing member 531 for fixing the terminal busbar 320.

The fixing member 531 may fix the second portion 322 of the terminal busbar 320 and may include a fixing hole 531a.

A fixing pin (not shown) may be inserted into the fixing hole 531a. The fixing pin (not shown) inserted into the joining hole 322a formed in the second portion 322 of the terminal busbar 320 is fixed by being coupled to the fixing hole 531a, thereby fixing the second portion 322 of the terminal busbar 320 to the insulating cover 500.

Accordingly, the second portion 322 of the terminal busbar 320 is mounted on the mounting portion 530 of the insulating cover 500, and the second portion 322 comes into contact with the fixing member 531 disposed on the mounting portion 530.

In addition, a terminal cover (not shown) covering the exposed one end (second portion 322) of the terminal busbar 320 may be disposed on the insulating cover 500.

As shown in FIGS. 5 to 7, in the present embodiment, the battery cell 110 may be provided as a pouch-type battery cell 110, and the number of pouch-type battery cells 110 stacked per unit area may be maximized. However, the battery cell 110 does not necessarily have to be provided as a pouch-type battery cell, and may be provided in a square form, a cylindrical form, or other various forms.

The battery cell 110 provided as a pouch-type battery cell may include an electrode assembly 120 and a cell case 130 that accommodates the electrode assembly 120.

The cell case 130 of the battery cell 110 may be a pouch-type cell case 130 for accommodating the electrode assembly 120. The cell case 130 may include a lower case 131 and an upper case 132 covering the lower case 131, and the upper and lower cases 132 and 131 may be formed integrally. In addition, as illustrated in FIG. 6, the connecting portion of the upper and lower cases 132 and 131 may be folded by bending. Although FIG. 6 illustrates a state in which the upper case 132 is positioned to open the upper part of the lower case 131 for convenience in order to show the inside of the pouch-type battery cell 110, in an actual finished product, the upper case 132 may completely cover the lower case 131 and a sealing portion S may be formed at the periphery as in FIG. 5.

The upper and lower cases 132 and 131 may both be formed in a laminate structure including an inner covering layer, a metal layer, and an outer covering layer. The inner covering layer is located inside the cell case 130 based on the metal layer, and the inner covering layer is required to have insulation and electrolytic resistance since it is in direct contact with the electrode assembly 120 and is required to have excellent thermal bonding strength in the sealing area where the inner layers are thermally bonded in order to seal the cell case. As the material of the inner covering layer, polyolefin resins such as polypropylene, polyethylene, polyethylene acrylic acid, and polybutylene, which have excellent chemical resistance and high sealing properties, polyurethane resin, and polyimide resin may be selected, and polypropylene (PP) which has excellent mechanical properties such as tensile strength, rigidity, surface hardness, impact strength, and chemical resistance is preferable.

The metal layer is located between the inner covering layer and the outer covering layer and serves as a barrier layer that prevents moisture or various gases from penetrating into the battery from the outside, and an aluminum (Al) thin film which is lightweight and has excellent formability may be used as a preferable material of the metal layer in contact with the inner covering layer.

The outer covering layer is located on the outside of the cell case 130 based on the metal layer, and a heat-resistant polymer with excellent tensile strength, moisture permeability, and air permeability may be used for the outer covering layer to protect the electrode assembly and ensuring heat resistance and chemical resistance. For example, nylon or polyethylene terephthalate can be used.

A receiving recess 133 may be formed in each of the upper and lower cases 132 and 131, and the electrode assembly may be accommodated in the receiving recess 133 of the upper and lower cases 132 and 131.

The electrode assembly 120 housed in the cell case 130 may be one of a group consisting of a jelly-roll type electrode assembly having a structure in which a separator is interposed between long sheet-shaped positive and negative electrodes and then rolled up, a stack type electrode assembly composed of unit cells having a structure in which rectangular positive and negative electrodes are laminated with a separator interposed therebetween, a stack-folding type electrode assembly in which unit cells are rolled up by a long separator film, and a lamination-stack type electrode assembly in which unit cells are laminated with a separator interposed therebetween and attached to each other.

In the present disclosure, the electrode assembly 120 may include, for example, an electrode laminate 125 and a fixing tape 129 for binding the electrode laminate 125 as illustrated in FIG. 7.

The electrode laminate 125 may include a positive electrode 126, a negative electrode 128, and a separator 127 disposed between the positive electrode 126 and the negative electrode 128, and may be formed by laminating the positive electrode 126, the separator 127, and the negative electrode 128. In addition, the electrode laminate 125 may be formed in a form in which the length in the longitudinal direction is relatively greater than the length in the width direction.

The positive electrode may include a positive electrode current collector and a first active material layer disposed on the positive electrode current collector, and the first active material layer may be formed by applying an electrode active material to one or both surfaces of the positive electrode current collector.

The negative electrode may include a negative electrode current collector and a second active material layer disposed on the negative electrode current collector, and the second active material layer may be formed by applying an electrode active material to one or both surfaces of the negative electrode current collector.

The above-mentioned fixing tape 129 is for fixing the electrode laminate 125 in which the positive electrode 126, the separator 127, and the negative electrode 128 are laminated, and fixes the electrode laminate 125 by winding the outside of the electrode laminate 125.

The electrode laminate 125 may include a plurality of positive electrodes 126, a plurality of negative electrodes 128, and a plurality of separators 127.

In addition, the electrode assembly 120 may include two electrode tabs 111 and 112 and two electrode leads 121 and 122.

The electrode tabs 111 and 112 are formed by protruding outward from the electrode laminate 125, one of the two electrode tabs 111 and 112 may be a positive tab connected (extended) to the positive electrode 126, and the other electrode tab 112 may be a negative tab connected (extended) to the negative electrode 128.

The electrode leads 121 and 122 are connected to the electrode tabs 111 and 112 and may be connected to the electrode tabs 111 and 112 by welding, for example. The material of the electrode leads 121 and 122 may be any electrically conductive material without any special restrictions. For example, the material of the electrode leads 121 and 122 may be at least one of copper (Cu), aluminum (Al), nickel (Ni), iron (Fe), carbon (C), chromium (Cr), and manganese (Mn). However, the electrode leads 121 and 122 are not limited to the materials described above, and the material of the electrode leads 121 and 122 may be selected in various ways in consideration of mechanical strength, flexibility, and processability.

Specific portions of the electrode leads 121 and 122 and the electrode tabs 111 and 112 may overlap vertically to form a welded portion, and the electrode tabs 111 and 112 and the electrode leads 121 and 122 may be connected to each other by this welded portion.

One of the two electrode leads 121 and 122 may be a positive lead connected to the positive tab, and the other electrode lead 122 may be a negative lead connected to the negative tab. The positive lead may be made of, for example, aluminum, and the negative lead may be made of, for example, copper or nickel-coated copper, but the present disclosure is not limited thereto.

As shown in FIGS. 5 to 7, a lead film 113 may be attached to each of the electrode leads 121 and 122. The lead film 113 attached to the electrode leads 121 and 122 is positioned between the electrode leads 121 and 122 and the cell case 130 to prevent a short circuit from occurring between the electrode leads 121 and 122 and the cell case 130 and to improve sealing strength to prevent leakage of the electrolyte.

The lead film 113 may be formed to wrap the electrode leads 121 and 122 by positioning a pair of lead films 113 on both sides of each of the electrode leads 121 and 122 and bonding parts that do not come into contact with the electrode leads 121 and 122 by a method such as heat sealing, and the lead film 113 may be formed such that a part thereof protrudes to be exposed outside the cell case 130 after sealing the cell case 130 to prevent short circuits (refer to FIG. 11).

Although the two electrode leads 121 and 122 are illustrated as being positioned on both sides of the electrode assembly 120, they may also be positioned on one side of the electrode assembly 120 depending on positioning of the electrode tabs 111 and 112. That is, when two electrode tabs 111 and 112 are disposed on one side of the electrode assembly 120, the two electrode leads 121 and 122 connected to the electrode tabs 111 and 112 may also be formed in the same direction of the electrode assembly 120.

Meanwhile, in one embodiment of the present disclosure, a heat transfer prevention pad 140 is attached to the pouch-type battery cell 110.

In FIG. 5, the cell case 130 of the pouch-type battery cell 110 may have a pair of long sides and a pair of short sides at the edge, and the pair of opposing short sides where the electrode leads 121 and 122 are disposed may be referred to as a cell terrace 135.

As shown in FIGS. 8 to 10, in the present embodiment, the heat transfer prevention pad 140 may be attached to the cell terrace 135 of the pouch-type battery cell 110.

The heat transfer prevention pad 140 includes a first pad part 141 disposed on one side of the cell terrace 135 and a second pad part 142 disposed on the opposite side of the cell terrace 135. The heat transfer prevention pad 140 may include, for example, silicon and may be made of silicon or the like. That is, the heat transfer prevention pad 140 may be made of a silicon pad.

Silicon as a material for the heat transfer prevention pad 140 has high elasticity (elasticity that allows the shape to change together when the terrace portion is deformed), heat resistance, and chemical resistance, which may be advantageous in preventing thermal propagation during thermal runaway.

The first pad part 141 is disposed on one side of the cell terrace 135, and an adhesive may be applied to the surface of the cell terrace 135 to which the first pad part 141 will be attached or an adhesive tape may be provided thereto. The first pad part 141 may be attached to the cell terrace 135 by the adhesive or the adhesive tape 141a applied to the attachment surface, which is the rear surface of the first pad part 141. The adhesive tape 141a may be a double-sided tape, and in the case of a double-sided tape, the release paper of the double-sided tape may be peeled off and then attached to the cell terrace 135.

The first pad part 141 may take a shape identical to or similar to the cell terrace 135 such that it can be attached to the maximum area of the cell terrace 135. That is, the edge of the first pad part 141 may be formed along the edge of the cell terrace 135. In addition, the first pad part 141 may cover at least a part of the lead film 113 or completely cover the lead film 113. In addition, the first pad part 141 may cover the cell terrace 135 including the parts of the upper and lower cases 131 and 132 covering the lead film 113. The first pad part 141 may include silicon and may be made of silicon or the like.

The second pad part 142 is disposed on the opposite side of one side of the cell terrace 135 on which the first pad part 141 is disposed, and an adhesive may be applied to the attachment surface of the cell terrace 135 or an adhesive tape may be provided thereto. The second pad part 142 may be attached to the cell terrace 135 by the adhesive or the adhesive tape 142a disposed on the attachment surface, which is the rear surface of the second pad part 142. The adhesive tape 142a may be a double-sided tape.

The second pad part 142 may be formed in a shape identical to or corresponding to the first pad part 141. That is, the second pad part 142 may be formed in a shape identical to or similar to the cell terrace 135 such that it can be attached to the maximum area of the cell terrace 135 like the first pad part 141. That is, the edge of the second pad part 142 may be formed along the edge of the cell terrace 135. In addition, the second pad part 142 may cover at least a part of the lead film 113 or completely cover the lead film 113. Further, the second pad part 142 may cover the cell terrace 135 including portions of the upper and lower cases 131 and 132 covering the lead film 133. The second pad part 142 may include silicon and may be formed of silicon or the like.

The first pad part 141 and the second pad part 142 of the heat transfer prevention pad 140 can cover 70% or more or 80% or more (in terms of area) of one surface of the cell terrace 135 to which they are attached.

The heat transfer prevention pad 140 may additionally include a connection part 143 that connects the first pad part 141 and the second pad part 142.

The connection part 143 is for connecting the first pad part 141 and the second pad part, and as illustrated, one end of the connection part 143 is connected to the first pad part 141 and the other end of the connection part 143 is connected to the second pad part 142.

In the present embodiment, the connection part 143 may include a slot 144. The slot 144 may extend along the edge of the cell terrace 135 from the connection part 143, and an insertion tab 135a of the cell terrace 135 may be inserted into the slot 144.

The first pad part 141, the second pad part 142, and the connection part 143 of the heat transfer prevention pad 140 may be formed integrally.

In a process of manufacturing the pouch-type battery cell 110, the upper case 132 covers the lower case 131, a sealing portion S is formed at the edge thereof, and then the outside of the sealing portion S is cut off. In the present embodiment, the sealing portion S is cut off with the insertion tab 135a left. Therefore, as shown in FIG. 11, the insertion tab 135a is formed to protrude from the sealing portion S.

This insertion tab 135a may be inserted into the slot 144 of the connection part 143. The insertion tab 135a inserted into the slot 144 can be exposed to the outside of the heat transfer prevention pad 140. The exposed insertion tab 135a may be bent toward the heat transfer prevention pad 140 and may have a bent portion 135b bent toward the heat transfer prevention pad 140. That is, the bent portion 135b may be a U-shaped bent portion 135b.

The end of the bent portion 135b may extend to the edge of the heat transfer prevention pad 140 and may be disposed to be in contact with the connection part 143, the first pad part 141, or the second pad part 142 of the heat transfer prevention pad 140.

In this way, in the present embodiment, the insertion tab 135a is inserted into the slot 144 of the connection part 143, and the inserted insertion tab 135a is bent toward the heat transfer prevention pad 140 to fix the heat transfer prevention pad 140.

The heat transfer prevention pad 140 may be disposed on both cell terraces 135 where the electrode leads 121 and 122 are disposed in the pouch-type battery cell 110.

Generally, when a thermal runaway occurs in a pouch-type battery cell, the flame can easily be transferred to adjacent cells through electrode leads. When a thermal runaway occurs in a battery cell, the sealing portion of the electrode leads of the battery cell is peeled off, the flame and discharged matter can be released, and the heat can be transferred to adjacent cells through this flame.

In the present embodiment, the heat transfer prevention pad 140 is attached to the cell terrace 135 where the electrode leads 121 and 122 are disposed in the cell case 130, and thus peeling of the sealing portion of the electrode leads 121 and 122 can be prevented when thermal runaway of the battery cell 110 occurs, which prevents thermal propagation to adjacent cells 110 and delays thermal runaway transfer due to thermal propagation.

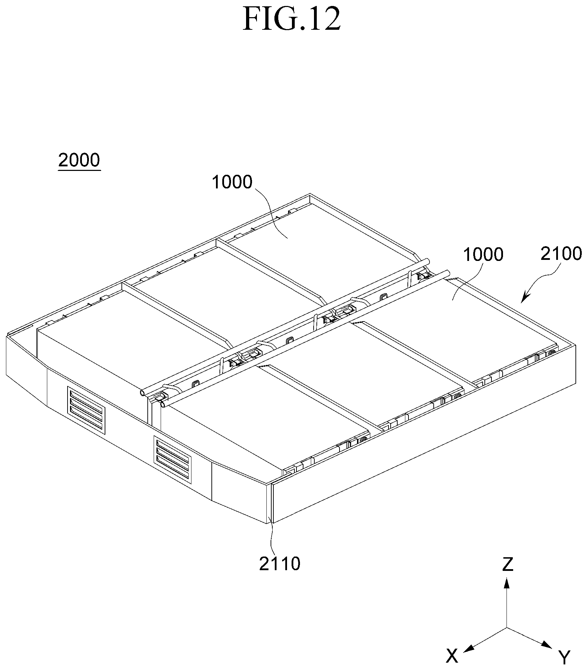

As described above, one or more battery modules 1000 according to the present disclosure can form a battery pack. As illustrated in FIG. 12, a battery pack 2000 according to the present disclosure may accommodate at least one battery module 1000 inside a pack case 2100, and may include various control and protection systems such as a battery management system (BMS) and a cooling system.

The pack case 2100 may include a lower housing 2110 and an upper housing (not shown) coupled to the upper side of the lower housing 2110, and a plurality of battery modules 1000 may be accommodated in the internal space of the lower housing 2110 and the upper housing.

Meanwhile, in the embodiment of the present disclosure, an example in which a plurality of battery modules 1000 is accommodated inside the battery pack 2000 is illustrated, but a plurality of battery cells 110 may be directly disposed inside the battery pack 2000.

The battery module 1000 and the battery pack 2000 according to the present disclosure configured as described above may be applied to various devices. Specifically, they may be applied to means of transportation such as electric bicycles, electric vehicles, and hybrid vehicles, or an energy storage system (ESS), but the present disclosure is not limited thereto and the battery module 1000 and the battery pack 2000 may be applied to various devices that can use secondary batteries.

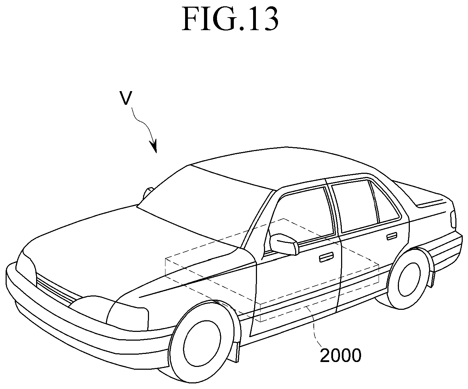

FIG. 13 is a diagram illustrating an electric vehicle V equipped with the battery pack 2000. In the electric vehicle V, the wheels are driven by a motor that receives power from the battery pack 2000 to drive the electric vehicle.

The present disclosure has been described with reference to preferred embodiments as described above, but is not limited to the above embodiments, and various changes and modifications may be made by those skilled in the art within the scope that does not depart from the spirit of the present disclosure.

### [INDUSTRIAL APPLICABILITY]

The present disclosure can provide a battery cell that can delay thermal propagation to adjacent cells when the battery cell experiences thermal runaway.

## Claims

1. A battery cell comprising:
an electrode assembly including electrode leads;
a cell case having a cell terrace on one side where the electrode leads are disposed and accommodating the electrode assembly; and
a heat transfer prevention pad disposed on the cell terrace of the cell case.

2. The battery cell of claim 1, wherein the cell terrace is disposed on both sides of the cell case, and the heat transfer prevention pad is disposed on each of the cell terraces on both sides of the cell case.

3. The battery cell of claim 1, wherein the heat transfer prevention pad comprises:
a first pad part disposed on one side of the cell terrace; and
a second pad part disposed on the other side of the cell terrace.

4. The battery cell of claim 3, wherein the first pad part and the second pad part include adhesive tapes and are attached to the cell terrace by the adhesive tapes.

5. The battery cell of claim 3, wherein the heat transfer prevention pad further comprises a connection part for connecting the first pad part and the second pad part.

6. The battery cell of claim 5, wherein the first pad part, the second pad part, and the connection part in the heat transfer prevention pad are formed integrally.

7. The battery cell of claim 5, wherein the connection part includes a slot.

8. The battery cell of claim 7, wherein the cell terrace includes an insertion tab inserted into the slot.

9. The battery cell of claim 8, wherein the insertion tab inserted into the slot has a bent portion bent toward the heat transfer prevention pad.

10. The battery cell of claim 9, wherein the bent portion is a U-shaped bent portion.

11. The battery cell of claim 9, wherein an end of the bent portion is disposed to be in contact with the heat transfer prevention pad.

12. The battery cell of claim 1, wherein the heat transfer prevention pad includes silicon.

13. The battery cell of claim 1, wherein the electrode assembly includes a lead film disposed on the electrode leads.

14. The battery cell of claim 13, wherein the heat transfer prevention pad covers the lead film.

15. The battery cell of claim 1, wherein the battery cell is a pouch-type battery cell.

16. A battery module comprising a plurality of battery cells according to claim 1.
